(19) Europäisches Patentamt
European Patent Office
Office européen des brevets

(11) EP 1 249 427 B1

(12) # FASCICULE DE BREVET EUROPEEN

(45) Date de publication et mention de la délivrance du brevet:
**07.05.2008 Bulletin 2008/19**

(51) Int Cl.:
***C01B 3/06*** *(2006.01)* ***H01M 8/00*** *(2006.01)*

(21) Numéro de dépôt: **02290675.4**

(22) Date de dépôt: **18.03.2002**

(54) **Compositions solides génératices d'hydrogène par combustion comprenant un borohydrure alcalin et un sel d'ammonium**

Durch Verbrennung wasserstoffgenerierende feste Zusammensetzungen, die ein Alkalimetall-Borohydrid und ein Ammoniumsalz enthalten

Solid compositions comprising an alkali metal borohydride and an ammonium salt, which generate hydrogen gas upon combustion

(84) Etats contractants désignés:
**AT BE CH CY DE DK ES FI FR GB GR IE IT LI LU MC NL PT SE TR**

(30) Priorité: **10.04.2001 FR 0104839**

(43) Date de publication de la demande:
**16.10.2002 Bulletin 2002/42**

(73) Titulaire: **SNPE Matériaux Energétiques**
**75004 Paris (FR)**

(72) Inventeurs:
- **Gauthier, Corinne**
  **91710 Vert le Petit (FR)**
- **Perut, Christian**
  **77310 St Fargeau Ponthierry (FR)**
- **Roller, Denis**
  **91590 La Ferte Alais (FR)**

(74) Mandataire: **Le Roux, Martine et al**
**Cabinet Beau de Loménie**
**158, rue de l'Université**
**75340 Paris Cédex 07 (FR)**

(56) Documents cités:
**US-A- 3 066 009**
**US-A- 3 126 305**
**US-A- 3 977 990**
**US-A- 4 468 263**
**US-A- 5 663 523**

- **AIELLO R ET AL: "Production of hydrogen gas from novel chemical hydrides" INTERNATIONAL JOURNAL OF HYDROGEN ENERGY, ELSEVIER SCIENCE PUBLISHERS B.V., BARKING, GB, vol. 23, no. 12, 1 décembre 1998 (1998-12-01), pages 1103-1108, XP004141821 ISSN: 0360-3199**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 249 427 B1

Printed by Jouve, 75001 PARIS (FR)

## Description

La présente invention se situe dans le domaine des générateurs d'hydrogène, gaz largement utilisé comme combustible ou réducteur dans de nombreux procédés industriels ou dispositifs.

Elle a plus précisément pour objet de nouvelles compositions solides décomposables en générant de l'hydrogène selon une réaction auto-entretenue de combustion, et l'utilisation de ces compositions pour alimenter en hydrogène les piles à combustibles à membrane échangeuse de protons.

De nombreuses compositions solides génératrices d'hydrogène par combustion sont connues, notamment pour produire de l'hydrogène destiné à servir de combustible dans les lasers chimiques.

Le brevet US 3 948 699 décrit des compositions solides génératrices d'hydrogène par combustion, constituées d'un mélange de borohydrure métallique, par exemple le borohydrure de sodium $NaBH_4$, avec un oxyde métallique, par exemple l'oxyde de fer $Fe_2O_3$ ou l'oxyde d'aluminium $Al_2O_3$.

Les rendements massiques en hydrogène produit sont toutefois faibles, inférieurs à 5%, exprimés en poids d'hydrogène obtenu par rapport au poids total de la composition.

Le brevet US 4 064 225 décrit d'autres compositions solides génératrices d'hydrogène par combustion, constituées d'un mélange de borohydrure métallique, par exemple le borohydrure de sodium, avec le sulfate d'ammonium $(NH_4)_2SO_4$ ou le bichromate d'ammonium $(NH_4)_2\ Cr_2O_7$.

Les rendements massiques sont légèrement plus élevés, de l'ordre de 6%.

De tels rendements en hydrogène, inférieurs où voisins de 5%, s'avèrent en pratique insuffisants, notamment lorsqu'une miniaturisation des systèmes est recherchée, par exemple lorsqu'on souhaite remplacer les batteries des systèmes électroniques portatifs, tels que téléphones et ordinateurs, par des piles à combustible à hydrogène miniatures.

L'homme du métier a donc le souci permanent de rechercher de nouvelles compositions solides génératrices d'hydrogène par combustion procurant de meilleurs rendements massiques en hydrogène, de façon à réduire le plus possible la taille et le poids des générateurs dans ces systèmes miniaturisés portatifs.

La présente invention propose une solution à ce problème.

Elle a plus précisément pour objet de nouvelles compositions solides décomposables en générant de l'hydrogène selon une réaction auto-entretenue de combustion après initiation de cette réaction par une source de chaleur appropriée, ladite composition comprenant un borohydrure alcalin et un sel d'ammonium minéral oxydant répondant à la formule générale $NH_4Y$ dans laquelle Y représente un groupement uniquement constitué d'azote et d'oxygène, le rapport teneur pondérale en borohydrure alcalin/teneur pondérale en sel de formule générale $NH_4Y$ étant compris entre 1 et 4. On a constaté, de façon inattendue, que de telles compositions permettaient de procurer un rendement massique en hydrogène de l'ordre de 8% à 14% selon la nature et les proportions relatives des constituants, ce qui constitue un progrès technique et économique particulièrement intéressant, pour les raisons précitées.

De façon préférée, Y représente le groupement nitrate ($-NO_3$) ou le groupement

dinitramidure 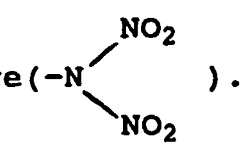.

Le nitrate d'ammonium est particulièrement préféré.

Selon une variante préférée, les compositions selon l'invention sont dépourvues de matière organique, c'est à dire qu'elles sont uniquement constituées de composés minéraux.

De façon particulièrement préférée, elles sont essentiellement constituées du borohydrure alcalin et du sel d'ammonium minéral $NH_4Y$, c'est à dire que ces constituants sont pondéralement majoritaires. On appréciera que la somme des teneurs pondérales en borohydrure alcalin et en sel d'ammonium $NH_4Y$ soit supérieure ou égale à 75%, mieux encore à 90%, et même à 95%, par rapport au poids total de la composition.

Les compositions uniquement constituées de borohydrure alcalin et de sel $NH_4Y$ sont particulièrement préférées. Par « uniquement constituées » il faut comprendre que les compositions peuvent néanmoins inclure les impuretés présentes dans le borohydrure alcalin et dans le sel $NH_4Y$ bruts ou purifiés utilisés, ou bien encore des additifs tels que des stabilisants, que ces produits soient commerciaux ou synthétisés selon des méthodes usuelles.

Lorsque les compositions ne sont pas uniquement constituées du borohydrure alcalin et du sel d'ammonium $NH_4Y$, elles peuvent par exemple également comprendre d'autres borohydrures métalliques, notamment alcalino-terreux, et/ou un hydrure métallique et/ou d'autres sels minéraux oxydants comme les nitrates alcalins, le sulfate d'ammonium , le bichromate d'ammonium, les oxydes de fer et l'oxyde d'aluminium.

Selon une autre variante préférée de l'invention, le borohydrure alcalin est choisi dans le groupe constitué par

le borohydrure de lithium, le borohydrure de sodium et leurs mélanges.

Selon une autre variante préférée, les compositions solides selon l'invention se présentent sous forme d'un matériau compact, ayant une forme propre, par exemple et de façon préférée sous forme de pastilles ou de grains. Les grains peuvent avoir une forme quelconque, de préférence sphérique, ovoïde ou cylindrique.

Les pastilles peuvent également avoir une épaisseur quelconque et une géométrie périphérique quelconque, par exemple circulaire, elliptique, carrée ou rectangulaire.

L'épaisseur des pastilles peut ne pas être constante.

Les compositions solides selon l'invention peuvent être obtenues par analogie avec les méthodes décrites utilisées pour obtenir les compositions solides précités de l'état de la technique, par exemple par simple mélange des constituants, broyage puis homogénéisation mécanique. On peut aussi broyer les constituants avant le mélange, ou bien encore utiliser des constituants se présentant déjà sous forme pulvérulente.

Les compositions peuvent également être obtenues par granulation.

Lorsque, de façon préférée, on veut obtenir une composition solide se présentant sous forme d'un matériau compact, le mélange homogène, granulaire ou pulvérulent, des divers constituants peut par exemple être aggloméré par compactage dans un pot de presse ayant la forme et les dimensions recherchées pour le matériau compact.

On peut également obtenir un matériau compact par mise en solution et/ou suspension des constituants dans un milieu liquide. Après homogénéisation et mise dans un moule aux dimensions appropriées et recherchées pour le matériau compact, on élimine le liquide, par exemple par évaporation, ce qui permet d'obtenir un matériau compact.

La présente invention a également pour objet un procédé de génération d'hydrogène par combustion auto-entretenue d'une composition solide comprenant un borohydrure alcalin et un sel d'ammonium minéral oxydant.

Selon ce procédé, on réalise tout d'abord une composition solide homogène, pulvérulente ou granulaire, comprenant un borohydrure alcalin et un sel d'ammonium de formule générale $NH_4Y$, Y ayant la signification précitée, le rapport teneur pondérale en borohydrure alcalin/teneur pondérale en sel de formule générale $NH_4Y$ étant compris entre 1 et 4.

On agglomère ensuite cette composition selon des moyens appropriés, par exemple ceux précités, de façon à former un matériau compact, puis on place le matériau compact dans une chambre à combustion que l'on purge sous gaz inerte ou sous vide.

Lorsque le volume mort est faible (volume restant de la chambre après mise en place du matériau compact), une telle purge peut, en pratique , être inutile.

On initie alors la combustion du matériau compact à l'aide d'une source de chaleur appropriée, ce qui provoque la combustion auto-entretenue du matériau avec génération d'hydrogène jusqu'à la fin de la combustion.

Les sources de chaleur appropriées permettant l'initiation de la combustion par effet « Joule » sont bien connues de l'homme du métier, notamment les initiateurs électriques. L'utilisation d'un filament d'allumage nickel-chrome placé en contact ou enrobé avec la composition à initier, auquel on impose une tension et une intensité de courant suffisantes (donc une puissance suffisante), convient parfaitement. On peut par exemple, pour une tension donnée, augmenter l'intensité du courant jusqu'à l'initiation de la combustion.

Dans certains cas, pour favoriser l'allumage, on peut disposer une poudre d'allumage relais classique bien connue de l'homme du métier, entre le filament et le matériau compact.

La présente invention a également pour objet un générateur pyrotechnique d'hydrogène destiné à alimenter en hydrogène une pile à combustible à membrane échangeuse de protons, comprenant une composition solide précitée selon l'invention.

Les piles à combustible fonctionnant à l'hydrogène, encore appelées piles à combustible à membrane échangeuse de protons, sont bien connues de l'homme de métier.

Une telle pile à combustible est essentiellement constituée de 2 parties :

- le coeur de la pile, constitué d'une ou plusieurs cellules électrochimiques montées en série, qui produit l'énergie électrique.
- le réservoir à combustible, à savoir l'hydrogène.

A ces deux parties principales, viennent se greffer des systèmes auxiliaires concernant notamment l'approvisionnement en hydrogène du coeur de la pile, l'évacuation de l'eau produite, ou bien encore le refroidissement.

Chaque cellule du coeur de la pile fournit de l'énergie électrique à partir de deux réactions électrochimiques réalisées sur deux électrodes baignant dans un électrolyte et séparées par une membrane échangeuse de protons. Sur l'anode, en présence d'un catalyseur, l'hydrogène est oxydé se séparant en protons et électrons. Le flux de protons traverse la membrane alors que les électrons sont captés par un circuit électrique externe. Les protons et les électrons se recombinent avec de l'oxygène de l'autre côté de la membrane, au niveau de la cathode, pour produire de l'eau.

Les générateurs pyrotechniques d'hydrogène selon l'invention sont essentiellement constitués d'une ou plusieurs chambres dans lesquelles on place une composition solide selon l'invention, de moyens séparés d'initiation de

la combustion de la composition dans chacune des chambres, de moyens de commande de cette initiation, et de moyens de transfert de l'hydrogène libéré dans les chambres vers l'anode d'une cellule du coeur de la pile.

De façon préféré, la quantité globale d'hydrogène susceptible d'être fourni par le générateur est libérée de façon discontinue par une initiation distincte de la combustion des compositions solides contenues dans les diverses chambres. La masse de composition solide dans chaque chambre peut être identique ou différente d'une chambre à l'autre. Cette dernière variante permet une libération d'hydrogène en quantité adaptée à un besoin ponctuel.

Les diverses chambres peuvent déboucher sur une chambre d'expansion de l'hydrogène libéré reliée au compartiment anodique d'une cellule, ou dont l'une des parois est au moins partiellement formée par l'anode.

La présente invention a également pour objet une pile à combustible à membrane échangeuse de protons utilisant l'hydrogène comme combustible, comprenant au moins une cellule électrochimique et un générateur pyrotechnique d'hydrogène précité selon l'invention relié au compartiment anodique de la cellule.

Les exemples non limitatifs suivants illustrent l'invention et les avantages qu'elle procure.

<u>**Exemple 1**</u> Composition solide constituée d'un mélange de $NaBH_4$ et de $NH_4NO_3$ dans les proportions pondérales relatives 60/40 respectivement.

On broie puis homogénéise un mélange de 90g de $NaBH_4$ et 60g de $NH_4NO_3$ contenant 7% en poids de $KNO_3$ comme additif stabilisateur de phase.

Une fraction du mélange pulvérulent et homogène ainsi obtenu est ensuite introduite puis compactée dans la matrice de compression d'une pastilleuse ayant la géométrie de pastille recherchée, sous une pression de $10^7$Pa (100 bar).

On introduit ensuite la pastille circulaire ainsi obtenue de diamètre 5mm et de masse 80mg dans une chambre à combustion de volume $10cm^3$, munie d'un manomètre, d'une sonde de température et d'un dispositif d'allumage usuel comprenant un filament nickel (80% en poids) - chrome (20% en poids). La pastille est mise au contact du filament puis on purge la chambre avec un gaz inerte (azote) sous pression absolue de $10^5$Pa (1 bar). On chauffe ensuite le filament par effet Joule jusqu'à l'initiation de la composition

Une fois initiée, le combustion de la composition est auto-entretenue et dure environ 3 s.

La température de combustion mesurée est de 1044˚K.

La combustion terminée, on refroidit la chambre à la température ambiante puis on note la pression dans la chambre.

L'augmentation de pression mesurée et l'analyse des gaz présents après combustion par chromatographie couplée à un spectromètre de masse permet de calculer un rendement massique en hydrogène de 8,2%, exprimé en g d'hydrogène libéré par g de composition solide.

<u>**Exemples 2 à 5**</u> compositions solides constituées de mélanges $NaBH_4/NH_4NO_3$ dans d'autres proportions pondérales.

On opère, pour ces exemples, rigoureusement de la même façon que selon l'exemple 1, avec les 2 mêmes constituants ($NaBH_4$ et $NH_4NO_3$), avec l'obtention d'une pastille de même masse, mais avec des proportions pondérales différentes entre ces 2 constituants.

Le tableau 1 suivant précise, pour chaque exemple, les proportions pondérales $NaBH_4/NH_4NO_3$ de la composition, la température de combustion mesurée ainsi que le rendement massique en hydrogène obtenu.

Tableau 1

| | Rapport massique $\frac{NaBH_4}{NH_4NO_3}$ | Température de combustion (˚K) | Rendement en hydrogène (%) |
|---|---|---|---|
| Exemple 2 | 65/35 | 958 | 8,7 |
| Exemple 3 | 70/30 | 865 | 9,0 |
| Exemple 4 | 75/25 | 515 | 9,3 |
| Exemple 5 | 78/22 | 265 | 9,4 |

**Exemples 6 à 10** Compositions solides constituées de mélanges $LiBH_4/NH_4NO_3$ dans diverses proportions pondérales.

On opère, pour ces exemples, rigoureusement de la même façon que selon les exemples 1 à 5, mais en remplaçant le borohydrure de sodium par du borohydrure de lithium.

Le tableau 2 suivant précise, pour chaque exemple, les proportions pondérales $LiBH_4/NH_4NO_3$ de la composition, la température de combustion mesurée ainsi que le rendement massique en hydrogène obtenu.

| | Rapport massique $\frac{LiBH_4}{NH_4NO_3}$ | Température De combustion (°K) | Rendement en hydrogène (%) |
|---|---|---|---|
| exemple 6 | 50/50 | 1500 | 11,8 |
| exemple 7 | 55/45 | 1435 | 12,4 |
| exemple 8 | 60/40 | 1320 | 13,1 |
| exemple 9 | 65/35 | 1060 | 13,4 |
| exemple 10 | 70/30 | 805 | 13,5 |

**Revendications**

1. Composition solide décomposable en générant de l'hydrogène selon une réaction auto-entretenue de combustion après initiation de cette réaction par une source de chaleur appropriée, ladite composition comprenant un borohydrure alcalin et un sel d'ammonium minéral oxydant, **caractérisée en ce que** le dit sel répond à la formule générale $NH_4Y$ dans laquelle Y représente un groupement uniquement constitué d'azote et d'oxygène, et **en ce que** le rapport teneur pondérale en borohydrure alcalin/teneur pondérale en sel de formule générale $NH_4Y$ est compris entre 1 et 4.

2. Composition solide selon la revendication 1, **caractérisée en ce que** Y représente le groupement nitrate ou dinitramidure.

3. Composition solide selon la revendication 1 ou 2, **caractérisée en ce qu'**elle se présente sous forme d'un matériau compact.

4. Composition solide selon la revendication 3, **caractérisée en ce que** le matériau compact est une pastille ou un grain.

5. Composition solide selon l'une quelconque des revendications 1 à 4, **caractérisée en ce qu'**elle est dépourvue de matière organique.

6. Composition solide selon l'une quelconque des revendications 1 à 5, **caractérisée en ce qu'**elle est essentiellement constituée du borohydrure alcalin et du sel de formule générale $NH_4Y$.

7. Composition solide selon l'une quelconque des revendications 1 à 6, **caractérisée en ce que** la somme des teneurs pondérales en borohydrure alcalin et en sel de formule générale $NH_4Y$ est supérieure ou égale à 90% par rapport au poids total de la composition.

8. Composition solide selon l'une quelconque des revendications 1 à 7, **caractérisée en ce que** le borohydrure alcalin est choisi dans le groupe constitué par le borohydrure de lithium, le borohydrure de sodium et leurs mélanges.

9. Procédé de génération d'hydrogène par combustion auto-entretenue d'une composition solide comprenant un borohydrure alcalin et un sel d'ammonium minéral oxydant **caractérisé en ce que** :

   - on réalise une composition solide homogène, pulvérulente ou granulaire comprenant un borohydrure alcalin et un sel d'ammonium de formule générale $NH_4Y$ dans laquelle Y représente un groupement uniquement constitué d'azote et d'oxygène, le rapport teneur pondérale en borohydrure alcalin/ teneur pondérale en sel de formule générale $NH_4Y$ étant compris entre 1 et 4,
   - on agglomère ensuite cette composition selon des moyens appropriés de façon à former un matériau compact,

- on place le matériau compact dans une chambre à combustion,
- on initie la combustion du matériau compact à l'aide d'une source de chaleur appropriée, ce qui provoque la combustion auto-entretenue du matériau avec génération d'hydrogène jusqu'à la fin de la combustion.

**10.** Générateur d'hydrogène destiné à alimenter en hydrogène une pile à combustible à membrane échangeuse de protons, **caractérisé en ce que** ce générateur est un générateur pyrotechnique comprenant une composition solide selon l'une quelconque des revendications 1 à 8.

**11.** Pile à combustible à membrane échangeuse de protons utilisant l'hydrogène comme combustible, comprenant au moins une cellule électrochimique et un générateur d'hydrogène relié au compartiment anodique de la cellule, **caractérisée en ce que** ce générateur d'hydrogène est un générateur pyrotechnique selon la revendication 10.

## Claims

**1.** A solid composition that can recompose in generating hydrogen in a self-sustaining combustion reaction after this reaction has been initiated by an appropriate heat source, the said composition comprising an alkali metal borohydride and an oxidizing mineral ammonium salt, **characterized in that** the said salt satisfies the general formula $NH_4Y$ in which Y represents a group consisting only of nitrogen and oxygen, and **in that** the ratio of the weight content of alkali metal borohydride to the weight content of the salt of general formula $NH_4Y$ is between 1 and 4.

**2.** The stolid composition according to claim 1, **characterized in that** Y represents the nitrate or dinitramide group.

**3.** The solid composition according to claim 1 or 2, **characterized in that** it is in the form of a compact material

**4.** The solid composition according to claim 3, **characterized in that** the compact material is a pellet or a particle.

**5.** The solid composition according to any one of claims 1 to 4, **characterized in that** it contains no organic matter.

**6.** The solid composition according to any one claims 1 to 5, **characterized in that** it essentially consists of an alkali metal borohydride and a salt of general formula $NH_4Y$.

**7.** The solid composition according to any one of claims 1 to 6, **characterized in that** the sum of the weight contents of alkali metal borohydride and of the salt of general formula $NF_4Y$ is greater than or equal to 90% compared with the total weight of the composition.

**8.** The solid composition according to any one of claims 1 to 7, **characterized in that** the alkali metal borohydride is chosen from the group consisting of lithium borohydride, sodium borohydride and mixtures thereof.

**9.** A process for generating hydrogen by self-sustaining combustion of a solid composition comprising an alkali metal borohydride and an oxidizing mineral ammonium salt, **characterized in that**:

a homogenous, pulverulent or granular, solid composition comprising an alkali metal borohydride and an ammonium salt of general formula $NH_4Y$, in which Y represents a group consisting only of nitrogen and oxygen, the ratio of the weight content of alkali metal borohydride to the weight content of the salt of general formula $NH_4Y$ being between 1 and 4, is produced;

- next, this composition is agglomerated using appropriate means so as to form a compact material;
- the compact material is placed in a combustion chamber; and
- the combustion of the compact material is initiated using an appropriate heat source, which causes the self-sustaining combustion of the material with generation of hydrogen until the end of combustion.

**10.** A hydrogen generator intended to supply a proton exchange membrane fuel cell with hydrogen, **characterized in that** this generator is a pyrotechnic generator comprising a solid composition according to any one of claims 1 to 8.

**11.** A proton exchange membrane fuel cell using hydrogen as fuel, comprising at least one electrochemical cell and a hydrogen generator connected to the anode compartment of the electrochemical cell, **characterized in that** this hydrogen generator is a pyrotechnic generator according to claim 10.

**Patentansprüche**

1. Feste Zusammensetzung, die unter Erzeugung von Wasserstoff gemäß einer selbsterhaltenden Verbrennungsreaktion nach Zündung dieser Realtion durch eine geeignete Wärmequelle zersetzbar ist, wobei die Zusammensetzung ein Alkalimetallborhydrid umfaßt und ein oxidierendes mineralisches Ammoniumsalz, **dadurch gekennzeichnet, daß** das Salz der allgemeinen Formel $NH_4Y$ entspricht, in welcher Y eine Gruppe darstellt, die lediglich besteht aus Stickstoff und Sauerstoff, und **dadurch, daß** das Verhältnis Gewichtsanteil an Alkalimetallborhydrid zu Gewichtsanteil an Salz mit allgemeiner Formel $NH_4Y$ zwischen 1 und 4 liegt.

2. Feste Zusammensetzung nach Anspruch 1, **dadurch gekennzeichnet, daß** Y die Nitrat- oder Dinitramidgruppe darstellt.

3. Feste Zusammensetzung nach Anspruch 1 or 2, **dadurch gekennzeichnet, daß** sie in Form eines kompakten Materials vorliegt.

4. Feste Zusammensetzung nach Anspruch 3, **dadurch gekennzeichnet, daß** das kompakte Material eine Pastille oder ein Korn ist.

5. Feste Zusammensetzung nach einem der Ansprüche 1 bis 4, **dadurch gekennzeichnet, daß** sie frei von organischem Material ist.

6. Feste Zusammensetzung nach einem der Ansprüche 1 bis 5, **dadurch gekennzeichnet, daß** sie im wesentlichen aus Alkalimetallborhydrid und dem Salz mit allgemeiner Formel $NH_4Y$ besteht.

7. Feste Zusammensetzung nach einem der Ansprüche 1 bis 6, **dadurch gekennzeichnet, daß** die Summe der Gewichtsanteile an Alkalimetallborhydrid und an Salz mit allgemeiner Formel $NH_4Y$ größer oder gleich 90% im Verhältnis zum Gesamtgewicht der Zusammensetzung ist.

8. Feste Zusammensetzung nach einem der Ansprüche 1 bis 7, **dadurch gekennzeichnet, daß** das Alkalimetallborhydrid aus der Gruppe gewählt ist, die aus Lithiumborhydrid, Natriumborhydrid und deren Gemischen besteht.

9. Verfahren zur Erzeugung von Wasserstoff durch selbsterhaltende Verbrennung einer festen Zusammensetzung, die ein Alkalimetallborhydrid und ein oxidierendes mineralisches Ammoniumsalz umfaßt, **dadurch gekennzeichnet, daß**:

   - man eine homogene, pulverförmige oder granulare feste Zusammensetzung ausführt, die ein Alkalimetallborhydrid und ein Ammoniumsalz mit allgemeiner Formel $NH_4Y$ umfaßt, in welcher Y eine Gruppe darstellt, die einzig aus Stickstoff und Sauerstoff besteht, wobei das Verhältnis Gewichtsanteil an Alkalimetallborhydrid zu Gewichtsanteil an Salz mit allgemeiner Formel $NH_4Y$ zwischen 1 und 4 ist,
   - man anschließend diese Zusammensetzung gemäß geeigneter Mittel derart agglomeriert, daß ein kompaktes Material ausgebildet wird,
   - man das kompakte Material in eine Brennkammer anordnet,
   - man die Verbrennung des kompakten Materials mit Hilfe einer geeigneten Wärmequelle zündet, was die selbsterhaltende Verbrennung des Materials mit Erzeugung von Wasserstoff bis zum Ende der Verbrennung hervorruft.

10. Wasserstofferzeuger zur Versorgung einer Brennstoffzelle mit Protonentauschermembran mit Wasserstoff, **dadurch gekennzeichnet, daß** dieser Erzeuger ein pyrotechnischer Erzeuger ist, der eine feste Zusammensetzung nach einem der Ansprüche 1 bis 8 umfaßt.

11. Brennstoffzelle mit Protonentauschermembran, welche Wasserstoff als Brennstoff verwendet, umfassend wenigstens eine elektrochemische Zelle und einen Wasserstofferzeuger, der mit dem anodischen Compartiment der Zelle verbunden ist, **dadurch gekennzeichnet, daß** dieser Wasserstofferzeuger ein pyrotechnischer Erzeuger gemäß Anspruch 10 ist.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 3948699 A
- US 4064225 A